# EUROPÄISCHE PATENTSCHRIFT

(11) **EP 0 654 295 B1**
(45) Veröffentlichungstag und Bekanntmachung des Hinweises auf die Patenterteilung: **12.03.1997**
(21) Anmeldenummer: 94117945.9
(22) Anmeldetag: 14.11.1994
(51) Int. Cl.: B01D 53/04

(54) **Verfahren und Anlage zum Entfernen von Lösemitteldämpfen aus Abluft**
Process and device for eliminating solvent vapours from exhaust air
Procédé et dispositif pour enlever des vapeurs de solvants de l'air d'échappement

(30) Priorität: 18.11.1993 DE 4339422; 21.03.1994 DE 4409622
(43) Veröffentlichungstag der Anmeldung: 24.05.1995
(73) Patentinhaber: U.E. SEBALD DRUCK UND VERLAG GmbH, D-90403 Nürnberg (DE)
(72) Erfinder: Straubinger, Werner, D-90403 Nürnberg (DE); Pecher, Günter, D-91484 Sugenheim (DE); Kohlmann, Richard, D-90559 Burgtann (DE)
(74) Vertreter: Strasser, Wolfgang, Dipl.-Phys

(56) Entgegenhaltungen:
- EP-A- 0 422 463
- DE-A- 2 352 075
- DE-A- 2 928 138
- US-A- 4 531 951

## Beschreibung

Die Erfindung betrifft ein Verfahren und eine Anlage zum Entfernen von Lösemitteldampfen aus Abluft gemäß den Oberbegriffen der Ansprüche 1 bzw. 12.

Solche Verfahren und Anlagen, wie sie beispielsweise in "Haus der Technik"-Vortragsveröffentlichungen 404 (1978), Seiten 98 ff beschrieben sind, kommen unter anderem in Druckereibetrieben zum Einsatz, wo es insbesondere im Bereich des Rotations-Tiefdrucks darum geht, das als Lösemittel für die Druckfarben verwendete Toluol, das beim Betrieb der Druckmaschine in die Luft des Arbeitsraumes abgegeben wird, nicht nur aus dem Arbeitsraum abzuführen, sondern auch aus der abgesaugten Abluft auszuscheiden und einer Wiederverwendung zuzuführen.

Dies geschieht mit Hilfe von Aktivkohle-Adsorbern, aus denen die gereinigte Abluft praktisch lösemittelfrei austritt. Tatsächlich liegt der Restlösemittelgehalt der Abluft mit etwa 20 mg/m³ so weit unter dem von den derzeit gültigen gesetzlichen Vorschriften (TA-Luft) geforderten Grenzwert von 100 mg/m³, daß es ohne weiteres zulässig ist, diese Abluft über einen Kamin ins Freie abzugeben.

Da ein Aktivkohle-Adsorber aus der ihn durchströmenden und zu reinigenden Abluft nur so lange Verunreinigungen entfernen kann, bis seine Beladung mit diesen Verunreinigungen einen gewissen Grenzwert erreicht hat, muß er zwischen zwei Betriebsarten hin- und herwechseln. Bei der einen Betriebsart handelt es sich um den eben beschriebenen Beladebetrieb, während dessen die verunreinigte Abluft den Adsorber von unten nach oben durchströmt, wobei die Lösemitteldämpfe von den Aktivkohleschichten adsorptiv gebunden werden. Ist die Adsorptionskapazität der Aktivkohle erschöpft, so wird der Adsorber automatisch vom Abluftstrom getrennt und in einen Regenerierungsbetrieb umgeschaltet, in welchem dem Adsorber gesättigter Wasserdampf über ein Ventil so zugeführt wird, daß der Dampf die Aktivkohle von oben nach unten durchströmt, wobei das Aktivkohlebett erwärmt und das adsorptiv gebundene Lösemittel desorbiert wird. Das dabei anfallende Dämpfegemisch wird kondensiert und einer Vorrichtung zugeführt, in der das Lösemittel vom Wasser getrennt und dabei in so reinem Zustand erhalten wird, daß es wiederverwendet werden kann.

Ist der Adsorber regeneriert, so wird die Dampfzufuhr beendet und der Adsorber wieder in den Beladebetriebszustand gebracht, in dem er von der zu reinigenden Abluft durchströmt wird.

Um den kontinuierlichen Betrieb der Druckmaschinen nicht dadurch zu stören, daß während des Regenerierzeitraumes eine Lösemitteladsorption nicht möglich ist, werden üblicherweise mehrere Adsorber parallel betrieben, deren Zahl so groß gewählt wird, daß dann, wenn einer von ihnen im Regenerierungsbetrieb arbeitet, die Adsorptions- bzw. Reinigungsleistung der übrigen Adsorber ausreicht, um die zur Abführung der anfallenden Lösemitteldämpfe abzusaugende Abluft in der erforderlichen Weise zu reinigen. In diesem Fall werden die Adsorber zumindest zeitweise derart gegensinnig betrieben, daß sich wenigstens einer der Adsorber im Regenerierungsbetriebszustand befindet, während wenigstens ein anderer im Beladebetrieb arbeitet.

Um die Lösemittelkonzentration am Arbeitsplatz unterhalb der vorgeschriebenen Werte zu halten, muß einem Drucksaal, in dem eine oder gar mehrere Rotations-Tiefdruckmaschinen arbeiten, eine erhebliche Luftmenge entzogen werden, die je Druckmaschine in der Größenordnung bis zu 150.000 m³/h liegen kann. Die Absaugung erfolgt zwar nicht unmittelbar im Drucksaal selbst sondern aus den die Rotations-Tiefdruckmaschinen überdeckenden Maschinenhauben bzw. den Trockeneinrichtungen der Druckwerke, die aber auf ihrer Zuströmseite zum Drucksaal hin offen sind. Um im Drucksaal den gegenüber der Außenluft gewünschten, geringfügigen Unterdruck aufrechtzuerhalten, muß dem Drucksaal eine der abgesaugten Luftmenge entsprechende Menge von konditionierter Frischluft zugeführt werden. Darunter ist aus der Umgebung angesaugte Luft zu verstehen, die zur Abscheidung von Staub und anderen Feststoffpartikeln gefiltert, auf die erforderliche Temperatur aufgeheizt oder abgekühlt und gegebenenfalls auch in ihrem Feuchtigkeitsgehalt auf einen gewünschten Wert eingestellt werden muß. Um diese Konditionierungsvorgänge für die genannten großen Luftmengen durchführen zu können, werden entsprechend große Frischluft-Gebläse und Konditionieranlagen benötigt, deren Betrieb einen beträchtlichen Energieaufwand erfordert.

Ausgehend von diesem Stand der Technik liegt der Erfindung die Aufgabe zugrunde, ein Verfahren der eingangs genannten Art sowie eine zu seiner Durchführung geeignete Anlage so weiterzubilden, daß der für die Durchführung dieses Verfahrens und insbesondere für die Ansaugung und Konditionierung der dem Arbeitsbereich zuzuführenden Frischluft erforderliche apparative Aufwand sowie die hierfür einzusetzende Energie erheblich vermindert werden können.

Zur Lösung dieser Aufgabe sieht die Erfindung die in den Ansprüchen 1 bzw. 12 zusammengefaßten Merkmale vor.

Diesen erfindungsgemäßen Maßnahmen liegt folgende Überlegung zugrunde:

Nach dem Stand der Technik ist eine Rückführung der aus den Adsorbern austretenden gereinigten Abluft in den Arbeitsbereich wirtschaftlich nicht sinnvoll. Dies hat seine Ursache darin, daß bisher alle aus den Adsorbern austretenden Luftströme sofort hinter den Adsorbern miteinander vermischt werden. Dadurch wird zwar der sehr heiße und sehr feuchte Luftstrom, der aus einem in der Anfangsphase eines Beladebetriebszustandes befindlichen Adsorber austritt, erheblich gekühlt. Gleichzeitig heizt er aber den von den Adsorbern kommenden Gesamtluftstrom so stark auf und bringt in ihn so viel Feuchtigkeit ein, daß der Kühl- und Entfeuchtungsaufwand, der getrieben werden müßte, um diesen Gesamtluftstrom so weit zu konditionieren, daß er in den Arbeitsbereich zurückgeführt werden kann, erheblich größer ist als der für die Konditionierung der angesaugten Umgebungs-Frischluft erforderliche Aufwand. Deshalb war es bisher kostengünstiger, die Abluft komplett in die Umgebung abzugeben und sie durch an anderer Stelle aus der Umgebung angesaugte Frischluft zu ersetzen.

Die Erfindung sieht nun als ersten Schritt vor, daß kurz vor Beendigung eines jeden Regenerierungszeitraumes eines Adsorbers diesem wahrend einer nur wenige Minuten dauernden Trocknungsphase statt Wasserdampf Abluft aus dem Arbeitsraum zugeführt wird. Diese Luft ist wegen des zu diesem Zeitpunkt noch sehr niederen Adsorptionswirkungsgrades des durchgehend heißen und feuchten Adsorbers nach ihrem Austritt aus diesem nicht nur sehr heiß und mit Wasserdampf sondern auch mit Lösemitteldämpfen beladen. Sie wird daher nicht mit der Luft vermischt, die von den im Beladebetrieb arbeitenden Adsorbern abgegeben wird. Vielmehr wird sie, nachdem sie vorzugsweise mit Hilfe eines Kondensators abgekühlt und entfeuchtet worden ist, wobei das in ihr enthaltene Toluol nicht ausgeschieden werden kann, in den Strömungsweg zurückgeführt, der vom Arbeitraum zu den Adsorbern führt, die im Beladebetrieb arbeiten und von denen sie in der erforderlichen Weise von Lösemitteldämpfen gereinigt wird.

Bei diesem Trocknungsschritt durchströmt die Abluft den Adsorber bereits von unten nach oben, d.h. in der Richtung, in der sie auch beim nachfolgenden Beladebetrieb strömt. Dabei trocknet und kühlt sie die untersten Adsorberschichten bereits soweit, daß nach kurzem auf den Beladebetrieb übergegangen werden kann, zu dessen Beginn durch diese unteren Schichten zwar bereits eine völlig ausreichende Reinigungswirkung erzielt wird, die oberen Adsoberschichten der durchströmenden Luft aber immer noch sehr viel Wärme und Feuchtigkeit aufladen.

Hier macht sich die Erfindung nun in einem zweiten Schritt die Tatsache zunutze, daß die Abluft die eben erwähnten hohen Temperatur- und Feuchtigkeitswerte nur für eine im Vergleich zur Gesamtdauer des Beladezeitraumes kurze Anfangsphase aufweist, und daß insbesondere die relative Feuchte bereits etwa 10 bis 12 Minuten nach Beginn einer neuen Beladungsphase von ca. 100 % auf einen ohne weiteres akzeptablen Wert abgesunken ist, wie ihn auch die Luft in etwa aufweist, die von bereits längere Zeit im Beladebetrieb arbeitenden Adsorbern abgegeben wird.

Hält man also während dieser Anfangsphase eines jeden neuen Beladezeitraumes die von dem betreffenden Adsorber abgegebene gereinigte Luft von den Luftströmen der anderen, bereits in der Hauptphase des Beladebetrieb arbeitenden Adsorbern getrennt, so kann man deren Abluft ohne besondere Konditionierung in den Arbeitsbereich zurückführen.

Der getrennt gehaltene, heiße und feuchte von Lösemittel einwandfrei gereinigte Abluftstrom kann entweder direkt in die Umgebung abgegeben oder mit einem Aufwand für eine Rückführung in den Arbeitsbereich konditioniert werden, der erheblich geringer ist als bei einer entsprechenden Konditionierung des sofort vermischten Gesamtluftstromes. Insbesondere ermöglicht das erfindungsgemäße Verfahren eine sehr flexible Vorgehensweise. So kann z.B. bei hohen Außentemperaturen die heiße, feuchte Luft aus der Anfangsphase direkt an die Umgebung abgegeben werden, während sie bei niederen Außentemperaturen vergleichsweise wenig gekühlt in den Arbeitsbereich zurückgeführt wird, so daß die in ihr enthaltene Restwärme zum Heizen dient.

Aufgrund der erfindungsgemäßen Maßnahmen muß dem Arbeitsbereich nur ein Bruchteil der Frischluftmenge zugeführt werden, der nach dem Stand der Technik erforderlich ist. Entsprechend niedriger ist auch der für die Konditionierung der dem Arbeitsbereich zugeführten Luft erforderliche apparative Aufwand sowie der permanent zu leistende Energieeinsatz.

Ein besonderer Vorteil des erfindungsgemäßen Verfahrens ist in seinen die Umwelt entlastenden Auswirkungen zu sehen. Diese bestehen einerseits darin, daß wegen der überwiegenden Rückführung der Abluft noch weniger Lösemittel nach außen abgegeben wird. Andererseits trägt auch der erheblich verminderte Energieverbrauch zu einer Schonung der Umwelt bei.

Die zeitliche Länge der Anfangsphase nach Beginn eines neuen Beladebetriebszeitraumes, während derer die aus dem betreffenden Adsorber austretende Luft nach außen ins Freie abgegeben wird, kann grundsätzlich mit Hilfe einer Zeitsteuerung festgelegt werden. Zu diesem Zweck wird für einen gegebenen Adsorber die Länge des Zeitraumes empirisch ermittelt, nach dem der oben erwähnte deutliche Abfall der Temperatur und insbesondere der relativen Luftfeuchtigkeit mit Sicherheit eingetreten ist. Anhand dieses Zeitwertes kann dann automatisch von der Einspeisung der aus dem Adsorber austretenden Luft in den Hilfsströmungsweg auf eine Einspeisung in den Hauptströmungsweg für eine unmittelbare Rückführung in den Arbeitsbereich umgeschaltet werden. Voraussetzung für diese Vorgehensweise ist allerdings, daß sich die Eigenschaften des Adsorbers nur sehr wenig ändern.

Vorzugsweise ist daher vorgesehen, die Temperatur der aus dem Adsorber austretenden gereinigten Abluft zu messen und von einer Einspeisung in den Hilfsströmungsweg auf eine unmittelbare Rückführung dann umzuschalten, wenn diese Temperatur einen vorgebbaren Grenzwert unterschritten hat.

Diese und weitere vorteilhafte Ausgestaltungen und Weiterbildungen des erfindungsgemäßen Verfahrens sowie der zu seiner Durchführung verwendeten Anlage sind in den Unteransprüchen 2 bis 11 bzw. 12 bis 20 niedergelegt.

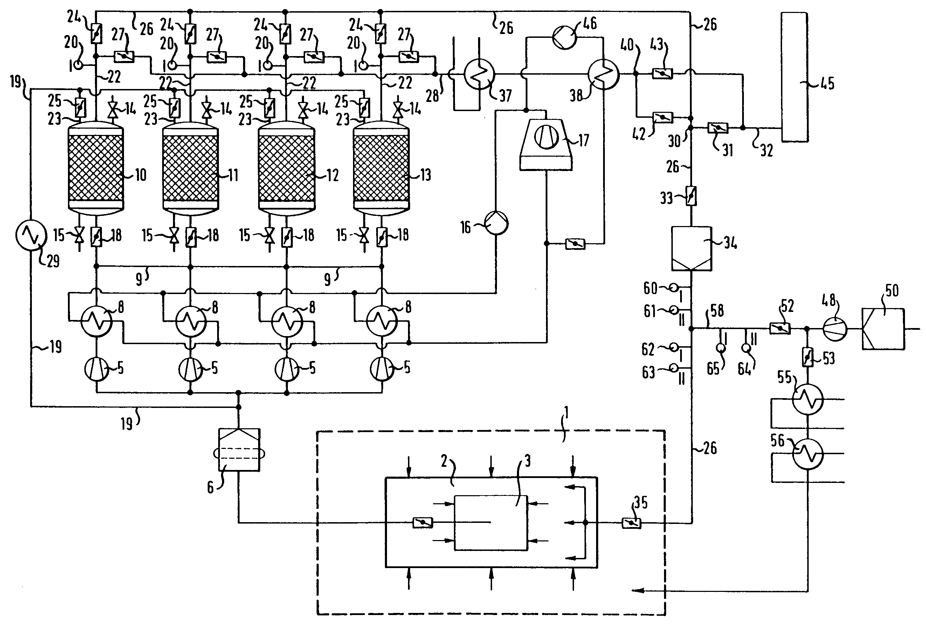

Die Erfindung wird im folgenden anhand eines Ausführungsbeispiels unter Bezugnahme auf die Zeichnung beschrieben; in dieser zeigt die einzige Figur eine Abluft-Reinigungsanlage, mit deren Hilfe die Lösemitteldämpfe, die in einem Drucksaal 1 und dort insbesondere in den unter der Maschinenhaube 2 befindlichen Druckwerkstrocknern 3 einer Rotations-Tiefdruckmaschine entstehen und bei denen es sich im Regelfall um Toluoldämpfe handelt, der Abluft entzogen und für eine erneute Verwendung rückgewonnen werden.

Zu diesem Zweck umfaßt die Abluft-Reinigungsanlage vier Gebläse 5, die über ein Rollbandfilter 6, das zum Zurückhalten von Farbstaub und anderen festen Partikeln dient, die Luft aus den Trocknern 3 und über diese auch aus der Maschinenhaube 2 absaugen. Jedem der Gebläse 5 ist ein Wärmetauscher 8 nachgeordnet, mit dessen Hilfe der von den Gebläsen 5 angesaugten Abluft Wärme entzogen werden kann, um deren Temperatur von etwa 45°C auf ca. 30°C abzusenken, wodurch der Adsorptions-Wirkungsgrad der nachfolgenden Aktivkohle-Adsorber 10 bis 13 erheblich erhöht wird.

Die Wärmetauscher 8 sind sowohl in Bezug auf die Maschinenabluft als auch hinsichtlich ihres Kühlmittelkreislaufes zueinander parallel angeordneten. Das Kühlmittel wird mit Hilfe einer Pumpe 16 über einen offenen Kühlturm 17 geführt, in welchem es die der Maschinenabluft entzogene Wärme abgeben kann. Zwischen der die Ausgänge der Wärmetauscher 8 miteinander verbindenden Sammelleitung 9 und jedem der Adsorber 10 bis 13 ist eine steuerbare Einlaßklappe 18 angeordnet, mit deren Hilfe der betreffende Adsorber 10 bis 13 völlig von dem vom Filter 6 kommenden Abluftstrom getrennt werden kann.

Jeder der Adsorber 10 bis 13 besitzt zwei Luft-Ausgangsleitungen 22, 23, von denen die erste dazu dient, die beim Beladebetrieb aus ihrem Adsorber austretende und von Lösemitteldämpfen weitestgehend gereinigte Luft weiterzuleiten. Um die Temperatur dieser Luft messen zu können weisen die ersten Luft-Ausgangsleitungen 22 jeweils einen Temperaturmeßfühler 20 auf.

Jede der ersten Luft-Ausgangsleitungen 22 ist Y-förmig verzweigt, wobei jeweils einer der Verzweigungsarme über eine erste steuerbare Auslaßklappe 24 in eine als Hauptströmungsweg dienende Rückführleitung 26 und der andere der beiden Verzweigungsarme über eine steuerbare Hilfs-Auslaßklappe 27 in einen Hilfsströmumgsweg 28 mündet.

Die zweiten Luft-Ausgangsleitungen 23 sind jeweils über eine zweite steuerbare Aulaßklappe 25 mit einer Leitung 19 verbunden und dienen dazu, Luft, die den zugehörigen Adsorber während einer den Regenerierungszeitraum abschließenden Trocknungsphase durchströmt, über diese Leitung 19 und einen Kondensator 29 zwischen dem Rollbandfilter 6 und den Gebläsen 5 in den Stömungsweg zurückzuleiten, der vom Arbeitsraum 2 zu den Adsorbern 10 bis 13 führt.

Jeder der Adsorber 10 bis 13 besitzt ein Dampfeintrittsventil 14 und ein Auslaßventil 15, die während des Hauptteils des Regenerierungszeitraums geöffnet sind, damit der Adsorber mit Wasserdampf, der ihn entgegen der Strömungsrichtung der zu reinigenden Abluft durchströmt, ausgedämpft werden kann. Die Eintrittsventile 14 werden von einer nicht dargestellten Dampfversorgungsanlage gespeist, während die Auslaßventile 15 über eine nicht dargestellte Leitung mit einer Lösemittelrückgewinnungsanlage verbunden sind, von der nur der Kondensator 29 wiedergegeben ist.

Die Rückführleitung 26 weist eine Y-förmige Verzweigungsstelle 30 auf, deren einer Verzweigungsarm über eine steuerbare Klappe 31 in eine Ausschleusleitung 32 mündet, während der andere Verzweigungsarm über eine steuerbare Klappe 33 und ein Filter 34, das zum Ausfiltern von eventuell in der Rückführleitung 26 mitgeführtem Kohleabrieb aus den Adsorbern 10 bis 13 dient, zurück in den Drucksaal 1 und dort über eine weitere steuerbare Klappe 35 in die Maschinenhaube 2 führt, in der die Rückführleitung 26 offen endet.

Der Hilfsströmungsweg 28 führt über einen optionalen Wärmetauscher 37 und einen in jedem Fall vorhandenen Wärmetauscher 38 zu einer Y-förmigen Verzweigungsstelle 40, deren einer Arm über eine steuerbare Klappe 42 in die Rückführleitung 26 und deren anderer Arm über eine steuerbare Klappe 43 in die Ausschleusleitung 32 mündet, die mit einem Kamin 45 verbunden ist, durch den in die Ausschleusleitung 32 strömende Luft in die Umgebung abgegeben werden kann. Der Kühlmittelkreislauf des Wärmetauschers 38 führt auch über den Kühlturm 17 und wird von einer Pumpe 46 angetrieben.

Ein Gebläse 48 dient dazu, über ein Filter 50 Frischluft aus der Umgebung anzusaugen, die mit Hilfe von zwei steuerbaren Klappen 52,53 entweder in die Rückführleitung 26 geblasen, dort mit der von den Adsorbern 10 bis 13 rückgeführten Luft vermischt und dann der Maschinenhaube 2 zugeführt oder über eine Wärmetauscheranordnung 55,56 unmittelbar dem Drucksaal 1 zugeführt werden kann. Die Wärmetauscheranornung 55,56 umfaßt zwei Wärmetauscher, von denen der eine zum wahlweisen Kühlen und der andere zum wahlweisen Erwärmen der angesaugten Frischluft dient. Der zuletzt genannte Wärmetauscher 56 kann mit dem Wärmetauscher 37 im Hilfsströmungsweg 28 zu einem Wärmeträgerkreislauf zusammengeschlossen sein. Die Wärme, die der Wärmetauscher 37 der den Hilfsströmungsweg 28 durchströmenden Abluft entzieht, kann aber auch anders als zum Heizen der angesaugten Frischluft verwendet werden.

An der Rückführleitung 26 sind vor und hinter dem Einmündungsbereich der vom Gebläse 48 kommenden Frischluftleitung 58 jeweils ein Feuchtigkeits- und Temperaturmeßfühler 60, 61 bzw. 62, 63 angeordnet. Auch die Frischluftleitung 58 weist unmittelbar vor ihrer Einmündung in die Rückführleitung 26 jeweils einen Feuchtigkeits- und einen Temperaturmeßfühler 64 bzw. 65 auf.

Die eben beschriebene Anlage arbeitet vorzugsweise folgendermaßen: Von den vier zueinander parallel angeordneten Adsorbern 10 bis 13 können sich jeweils drei, beispielsweise die Adsorber 10 bis 12, im Beladebetriebszustand befinden, während gleichzeitig der vierte Adsorber 13 regeneriert wird. Zu diesem Zweck wird der Luftstrom des zugehörigen Gebläses 5 über die Sammelleitung 9 auf die Adsorber 10 bis 12 verteilt und die entsprechende steuerbare Einlaßklappe 18 geschlossen, so daß der zu regenerierende Adsorber 13 von dem aus dem Filter 6 kommenden Abluftstrom getrennt ist.

Auch auf der Ausgangsseite des Adsorbers 13 sind die steuerbaren Klappen 24, 25 und 27 geschlossen. Um die an der Aktivkohle des Adsorbers 13 adsorbierten Lösemittelrückstände zu desorbieren, wird dem Adsorber über das Dampfeintrittsventil 14 gesättigter Wasserdampf zugeführt, der die Aktivkohle von oben nach unten durchströmt. Dabei erwärmt der Wasserdampf das Aktivkohlebett und desorbiert das Lösemittel. Das anfallende, sich unterhalb des Aktivkohlebetts kondensierende Lösemittel/Wasser-Gemisch wird über das Auslaßventil 15 und eine nicht dargestellte Abführleitung einer Trennanlage zugeführt, in der das Lösemittel so vom Wasser getrennt wird, daß es erneut verwendet werden kann.

Während dieser Regeneration wird die Aktivkohleschüttung auf ca. 120°C erhitzt und stark mit Wasserdampf gesättigt. Würde man nach dem Schließen der Ventile 14 und 15 übergangslos auf Beladebetrieb umschalten, hätte der Adsorber zunächst einen äußerst schlechten Adsorptionswirkungsgrad.

Um dies zu vermeiden, wird jeder Regenerierungszeitraum durch eine Trocknungsphase beendet, während derer die Einlaßklappe 18 und die zweite Auslaßlaßklappe 25 geöffnet sind, die Auslaßklappen 24 und 27 aber geschlossen bleiben. Somit kann aus dem Arbeitsraum 2 abgesaugte Abluft den Adsorber als Trocknungsmedium durchströmen. Wegen des durch die hohe Temperatur bedingten schlechten Wirkungsgrades des Adsorbers ist diese Luft nach dem Autritt nicht nur heiß und feucht, sondern auch noch stark mit Lösemitteldämpfen beladen. Im Kondensator 29 wird sie zwar gekühlt und entfeuchtet, doch verringert sich ihr Lösemittelgehalt nur unwesentlich. Sie wird daher in den Stömungsweg zurückgeleitet, der vom Arbeitsraum 2 zu den im Beladebetrieb arbeitenden Adsorbern 10 bis 12 führt. Dort wird sie mit der übrigen vom Arbeitraum 2 angesaugten Abluft so gereinigt, daß sie unbedenklich in den Hauptströmungsweg 26 eingespeist werden kann, der zum Arbeitsraum 2 zurückführt.

Wird die Trocknungsphase durch Schließen der zweiten steuerbaren Auslaßklappen 25 beendet, so wird die dem Adsorber 13 zugeführte Abluft zunächst immer noch sehr stark erwärmt und mit Feuchtigkeit beladen.

Eine unmittelbare Rückführung dieser Luft in den Arbeitsbereich ist daher nicht möglich. Gemäß dem beschriebenen Verfahren kann sie aber von den Luftströmen getrennt gehalten werden, die aus den anderen Adsorbern 10 bis 12 austreten, die sich schon seit längerer Zeit im Beladebetriebszustand befinden und daher Luft abgeben, die ausreichend kühl und trocken ist, um ohne weitere Konditionierung (eventuell nach einfacher Filterung) in den Arbeitsbereich zurückgeführt zu werden.

Mit der Luft, die aus dem in der Anfangsphase eines Beladebetriebszustandes befindlichen Adsorber 13 austritt, kann auf verschiedene Weise verfahren werden. In jedem Fall bleibt die zugehörige erste Auslaßklappe 24 zunächst geschlossen und wird die entsprechende steuerbare Hilfs-Auslaßklappe 27 geöffnet, so daß die erwähnte heiße und feuchte Luft durch den Hilfsströmungsweg 28 fließt. Mit Hilfe des Wärmetauschers 37 kann ein Teil der in ihr enthaltenen Wärme rückgewonnen und einer weiteren Verwendung zugeführt werden.

Danach kann diese Luft direkt in die Ausschleusleitung 32 und durch diese in den Kamin 45 geführt werden, der sie in die Umgebung abgibt. Wenn nur diese Betriebsart gewünscht wird, können der Wärmetauscher 38, die Verzweigungsstelle 40 und die steuerbaren Klappen 42, 43 weggelassen werden.

Zur Erzielung einer höheren Flexibilität können diese Elemente jedoch dazu verwendet werden, die Luft, die in der Anfangsphase eines jeden Beladebetriebszustandes eines der Adsorber 10 bis 13 den Hilfsströmungsweg 28 durchströmt, im Wärmetauscher 38 so weit abzukühlen, daß sie bei geöffneter steuerbarer Klappe 42 und geschlossener steuerbarer Klappe 43 in die Rückführleitung 26 eingespeist werden kann.

Die beiden eben beschriebenen Möglichkeiten schließen einander nicht aus, d.h. es kann auch ein Teil der den Hilfsströmungsweg 28 durchströmenden Luft an die Umgebung abgegeben und der Rest nach entsprechender Konditionierung in die Rückführleitung 26 eingespeist werden. Schließlich ist es auch möglich, einen Teil der ausreichend kühlen und trockenen Luft, die von den bereits längere Zeit im Beladebetrieb arbeitenden Adsorbern 10 bis 12 kommt und in der Rückführleitung 26 fließt, an der Verzweigungsstelle 30 abzuzweigen und in die Ausschleusleitung 32 einzuspeisen. Zu diesem Zweck wird mit Hilfe der steuerbaren Klappe 33 der Strömungswiderstand in der Leitung 26 erhöht und die steuerbare Klappe 31 entsprechend weit geöffnet. Dies wird zur Konstanthaltung der Luftmengenbilanz dann durchgeführt, wenn dem Drucksaal 1 oder der Maschinenhaube 2 eine besonders große Menge Frischluft zugeführt werden soll.

Nach einer gewissen Zeitspanne ist die Anfangsphase des Beladebetriebszeitraumes beendet, d.h. die aus dem Adsorber 13 austretende, gereinigte, einen Restlösemittelgehalt von etwa 20 mg/m³ aufweisende Abluft hat von selbst eine so niedrige Temperatur und eine so geringe Feuchtigkeit erreicht, daß sie ohne weiteres in den Arbeitsbereich, insbesondere die Maschinenhaube 2 der Rotationstiefdruckmaschine zurückgeführt werden kann. Zu diesem Zeitpunkt, der entweder über eine Zeitsteuerung oder vorzugsweise mit Hilfe des dem Adsorber 13 nachgeordneten Temperaturmeßfühlers 20 ermittelt wird, wird die betreffende Hilfs-Auslaßklappe 27 geschlossen und stattdessen die zugehörige erste Auslaßklappe 24 geöffnet, so daß die aus dem Adsorber 13 austretende gereinigte Abluft über die Rückführleitung 26 in den Arbeitsbereich zurückgeführt wird.

Entsprechendes gilt auch für die anderen Adsorber 10 bis 12, von denen dann, wenn der eben beschriebene Adsorber 13 aus dem Regenerierungs- in den Beladebetrieb umgeschaltet wird, einer aus dem Beladebetrieb in den Regenerierungsbetrieb wechseln und die gleichen Schritte durchlaufen kann, wie sie eben geschildert wurden.

Die steuerbaren Klappen 33, 52 und 53 dienen dazu, die mit Hilfe des Gebläses 48 angesaugte Frischluft entweder direkt dem Drucksaal 1 zuzuführen, wobei sie mit Hilfe des Wärmetauschers 55 gekühlt oder durch den Wärmetauscher 56 erwärmt werden kann, oder zumindest einen Teil dieser Frischluft mit der in der Rückführleitung 26 strömenden gereinigten Abluft zu vermischen.

Mit Hilfe der Meßfühler 60, 61, sowie 64, 65 und 62, 63 können die Feuchtigkeit und die Temperatur der gereinigten Abluft, der von außen zugeführten Frischluft sowie des aus diesen beiden Luftströmen erzeugten Gemisches gemessen werden. Mit Hilfe dieser Meßwerte kann dann das Mischungsverhältnis so verändert werden, daß die in die Maschinenhaube 2 rückgeführte Luft die erforderlichen Werte aufweist.

Aus dem oben gesagten ergibt sich, daß das erfindungsgemäße Verfahren auch dann angewendet werden kann, wenn die aus dem Arbeitsbereich 1 bzw. 2 abgesaugte Abluft mit mehr oder weniger als vier Adsorbern gereinigt wird. Wesentlich ist lediglich, daß jeder vorhandene Adsorber am Ende eines jeden Regenerierungszeitraumes die beschriebene Trocknungsphase zur Erzielung des erforderlichen Adsorptionswirkungsgrades durchläuft und dann, wenn er vom Regenerierungs- in den Beladebetrieb umgeschaltet worden ist, für die oben definierte Anfangsphase die von ihm gereinigte Abluft in den Hilfsströmungsweg 28 einspeist, von dem sie je nach Bedarf in die zum Kamin 45 führende Ausschleusleitung 32 oder nach entsprechender Abkühlung und Entfeuchtung durch den Wärmetauscher 38 in die Rückführleitung 26 weitergeleitet werden kann. Nach Beendigung der Anfangsphase, d.h. dann, wenn die aus dem betreffenden Adsorber austretende Abluft entsprechend günstige Werte erreicht hat, wird sie dann unmittelbar in die Rückführleitung 26 eingespeist.

## Patentansprüche

1. Verfahren zum Entfernen von Lösemitteldämpfen aus Abluft, die aus einem Arbeitsraum (2) abgesaugt und mit Hilfe von wenigstens zwei zueinander parallel angeordneten Aktivkohle-Adsorbern (10, 11, 12, 13) gereinigt wird, von denen jeder Arbeitszyklen durchläuft, die jeweils einen Beladezeitraum, in dem der Adsorber (10, 11, 12, 13) von der Abluft durchströmt wird und die in ihr enthaltenen Lösemitteldämpfe adsorbiert, und einen Regenerierungszeitraum umfassen, in dem der Adsorber (10, 11, 12, 13)vom Abluftstrom getrennt ist und von Wasserdampf durchströmt wird, der das zuvor adsorbierte Lösemittel desorbiert und ausspült, wobei die Arbeitzyklen der wenigstens zwei Adsorber (10, 11, 12, 13) zur Erzielung eines kontinuierlichen Adsorptionsbetriebes zeitlich so gegeneinander versetzt sind, daß immer wenigstens einer der Adsorber (10, 11, 12, 13) im Beladebetrieb arbeitet,
dadurch **gekennzeichnet,**
daß jeder Regenerierungszeitraum eine abschließende Trocknungsphase umfaßt, in der der betreffende Adsorber (10, 11, 12, 13) statt von Wasserdampf von Abluft aus dem Arbeitsraum (2) durchströmt wird, die nach Verlassen dieses Adsorbers (10, 11, 12, 13) dem wenigstens einen in diesem Zeitraum im Beladebetrieb arbeitenden Adsorber (10, 11, 12, 13) zugeführt wird,
daß jeder Beladezeitraum eine Anfangsphase und eine nachfolgende Hauptphase umfaßt, die dadurch bestimmt sind, daß der heiße und feuchte Luftstrom, der aus einem in der Anfangsphase eines Beladezeitraumes befindlichen Adsorber (10, 11, 12, 13) austritt, einer gesonderten Behandlung zugeführt wird, während der Luftstrom, der aus einem in der Hauptphase eines Beladezeitraumes befindlichen Adsorber (10, 11, 12, 13) austritt, unmittelbar in den Arbeitsraum (2) zurückgeführt wird.

2. Verfahren nach Anspruch 1, dadurch **gekennzeichnet,** daß die Länge der Anfangsphase des Beladezeitraumes mit Hilfe einer Zeitsteuerung festgelegt wird.

3. Verfahren nach Anspruch 1, dadurch **gekennzeichnet,** daß die Temperatur des aus einem im Beladebetrieb arbeitenden Adsorber (10, 11, 12, 13) austretenden Luftstroms gemessen und die Anfangsphase des Beladezeitraums beendet wird, wenn diese Temperatur einen vorgebbaren Grenzwert unterschreitet.

4. Verfahren nach einem der Ansprüche 1 bis 3, dadurch **gekennzeichnet,** daß die gesonderte Behandlung darin besteht, daß zumindest ein Teil des in der Anfangsphase des Beladezeitraumes aus einem Adsorber (10, 11, 12, 13) austretenden, getrennt gehaltenen Luftstroms gekühlt und danach in den Arbeitsraum (2) zurückgeführt wird.

5. Verfahren nach einem der Ansprüche 1 bis 4, dadurch **gekennzeichnet,** daß die gesonderte Behandlung darin besteht, daß zumindest ein Teil des in der Anfangsphase des Beladezeitraumes aus einem Adsorber (10, 11, 12, 13) austretenden, getrennt gehaltenen Luftstroms in die Umgebung ausgeschleust wird.

6. Verfahren nach Anspruch 5, dadurch **gekennzeichnet,** daß die in die Umgebung ausgeschleuste Luft zuvor einen Wärmetauscher (37) durchläuft, um einen Teil der in ihr enthaltenen Wärme zurückzugewinnen.

7. Verfahren nach einem der Ansprüche 1 bis 6, dadurch **gekennzeichnet,** daß eine Frischluftmenge, die in etwa der in die Umgebung ausgeschleusten Luftmenge entspricht, aus der Umgebung angesaugt, konditioniert und dem Arbeitsraum (2) zugeführt wird.

8. Verfahren nach den Ansprüchen 6 und 7, dadurch **gekennzeichnet,** daß die Wärme, die der in die Umgebung ausgeschleusten Luft entzogen wird, zum Erwärmen der aus der Umgebung angesaugten Frischluft verwendet wird.

9. Verfahren nach einem der Ansprüche 7 oder 8, dadurch **gekennzeichnet,** daß die aus der Umgebung angesaugte, konditionierte Frischluft dem Arbeitsraum (2) unmittelbar zugeführt wird.

10. Verfahren nach einem der Ansprüche 7 oder 8, dadurch **gekennzeichnet,** daß die aus der Umgebung angesaugte Frischluft zumindest teilweise mit der von den Adsorbern (10, 11, 12, 13) rückgeführten Luft vermischt und dieses Luftgemisch dem Arbeitsraum (2) zugeführt wird.

11. Verfahren nach einem der Ansprüche 7 bis 10, dadurch **gekennzeichnet,** daß die von den Adsorbern zurückgeführte Luft einem anderen Bereich des Arbeitsraumes zugeführt wird, als die aus der Umgebung angesaugte, konditionierte Frischluft.

12. Anlage zum Entfernen von Lösemitteldämpfen aus Abluft gemäß dem Verfahren nach einem der vorhergehenden Ansprüche,
- mit Gebläsen (5) zum Absaugen der Abluft aus einem Arbeitsraum (2),
- mit wenigstens zwei zueinander parallel angeordneten Aktivkohle-Adsorbern (10, 11, 12, 13),
- mit einer durch eine Steuereinrichtung steuerbaren Klappenanordnung, die für jeden der wenigstens zwei Adsorber (10, 11, 12, 13) eine Einlaßklappe (18), die ihn im geöffneten Zustand mit dem zugehörigen Gebläse (5) verbindet, und eine Auslaßklappe (24) umfaßt, die im geöffneten Zustand die aus dem Adsorber (10, 11, 12, 13) austretende Luft in einen Hauptströmungsweg (26) leitet, sodaß jeder der Adsorber (10, 11, 12, 13) zwischen einem Beladebetrieb, in dem er von der zu reinigenden Abluft durchströmt wird und das in ihr enthaltene Lösemittel adsorbiert, und einem Regenerierungsbetrieb hin- und herschaltbar ist, in dem er vom Abluftstrom getrennt ist und von Wasserdampf durchströmt werden kann, der das adsorbierte Lösemittel desorbiert und ausspült, wobei das Umschalten in der Weise alternierend erfolgt, daß immer wenigstens einer der Adsorber (10, 11, 12, 13) im Beladebetrieb arbeitet, und
- mit einer Ausschleuseinrichtung (32, 45), mit deren Hilfe Luft, die einen der Adsorber (10, 11, 12, 13) durchströmt hat, in die Umgebung abgegeben werden kann,
dadurch **gekennzeichnet,** daß die steuerbare Klappenanordnung weiterhin für jeden Adsorber (10, 11, 12, 13) folgendes umfaßt:
- eine zweite Auslaßklappe (25), die im geöffneten Zustand den Adsorber (10, 11, 12, 13) mit einer Leitung (19) verbindet, über die aus dem Adsorber (10, 11, 12, 13) austretende Luft zu dem vom Arbeitsraum (2) zu den Adsorbern (10, 11, 12, 13) führenden Strömungsweg rückführbar ist, so daß Luft aus dem Arbeitsraum (2), die einen Adsorber (10, 11, 12, 13) in einer dessen Regenerierungszeitraum abschließenden Trocknungsphase bei geöffneter Einlaßklappe (18) und geschlossener erster Auslaßklappe (24) durchströmt, über die geöffnete zweite Auslaßklappe (25) dem wenigstens einen im Beladebetrieb arbeitenden Adsorber (10, 11, 12, 13) zuführbar ist,
- eine Hilfs-Auslaßklappe (27), die im geöffneten Zustand den Adsorber (10, 11, 12, 13) mit einem Hilfsströmungsweg (28) verbindet, sodaß Luft aus dem Arbeitsraum (2), die den Adsorber (10, 11, 12, 13) in einer Anfangsphase seines Beladezeitraums bei geöffneter Einlaßklappe (18) und geschlossener erster und zweiter Auslaßklappe (24, 25) durchströmt, über diesen Hilfsströmungsweg (28) einer gesonderten Behandlung zuführbar ist,
und daß
der Hauptströmungsweg (26) mit dem Arbeitsraum (2) verbunden ist, so daß Luft aus dem Arbeitsraum (2), die den Adsorber (10, 11, 12, 13) in einer der Anfangsphase nachfolgenden Hauptphase seines Beladezeitraumes durchströmt, nach ihrer Reinigung in den Arbeitsraum (2) rückführbar ist.

13. Anlage nach Anspruch 12, dadurch **gekennzeichnet,** daß die Steuereinrichtung eine Zeitsteuerung umfaßt, die die Länge der Anfangsphase vorgibt.

14. Anlage nach Anspruch 12, dadurch **gekennzeichnet,** daß die Steuereinrichtung für jeden Adsorber (10, 11, 12, 13) eine Temperaturmeßvorrichtung (20) zum Messen der Temperatur der aus ihm austretenden, gereinigten Luft umfaßt, die die Anfangsphase beendet, wenn die Temperatur der austretenden Luft einen vorgebbaren Grenzwert unterschreitet.

15. Anlage nach einem der Ansprüche 12 bis 14, dadurch **gekennzeichnet,** daß der Hilfsströmungsweg (28) eine Kühleinrichtung (38) umfaßt und zu einer Umschalteinrichtung (42, 43) führt, mit deren Hilfe die ihn durchströmende Luft zumindest teilweise nach entsprechender Kühlung in den Hauptströmungsweg (26) einspeisbar und zumindest teilweise einem Ausschleuskamin (45) zuführbar ist.

16. Anlage nach einem der Ansprüche 12 bis 15, dadurch **gekennzeichnet,** daß der Hilfsströmungsweg (28) eine zweite Kühleinrichtung (37) umfaßt.

17. Anlage nach einem der vorhergehenden Ansprüche, dadurch **gekennzeichnet,** daß eine Ansaug- und Konditioniereinrichtung (48, 50, 55, 56) für Frischluft aus der Umgebung vorgesehen ist, die eine der ausgeschleusten Luftmenge entsprechende Menge an Frischluft dem Arbeitsraum zuführt.

18. Anlage nach Anspruch 17, dadurch **gekennzeichnet,** daß die Ansaug- und Konditioniereinrichtung (48, 50, 55, 56) einen Wärmetauscher (56) zum Heizen und/oder einen Wärmetauscher (55) zum Kühlen der angesaugten Frischluft umfaßt.

19. Anlage nach Anspruch 18, dadurch **gekennzeichnet,** daß der Wärmetauscher (56) zum Heizen der angesaugten Frischluft mit einer der Kühlvorrichtungen (37, 38) des Hilfsströmungsweges (28) durch einen gemeinsamen Warmeträger-Kreislauf verbunden ist.

20. Anlage nach einem der Ansprüche 18 oder 19, dadurch **gekennzeichnet,** daß eine Mischeinrichtung (33, 52, 53) vorgesehen ist, durch die zumindest ein Teil der aus der Umgebung angesaugten Frischluft mit der von den Adsorbern (10, 11, 12, 13) rückgeführten Luft vermischt werden kann.

## Claims

1. A method for removing solvent vapor from exhaust air which is sucked out of a working space (2), wherein the air is cleaned by means of at least two activated carbon adsorbers (10, 11, 12, 13) which are in mutually parallel relationship and each of which runs through operating cycles which each comprise a charging period in which the exhaust air flows through the adsorber (10, 11, 12, 13) and the adsorber adsorbs the solvent vapor contained in the exhaust air, and a regeneration period in which the adsorber (10, 11, 12, 13) is separated from the flow of exhaust air and water vapor flows through the adsorber to desorb and flush out the previously adsorbed solvent, wherein the working cycles of at least two adsorbers (10, 11, 12, 13) are displaced relative to each other in respect of time in such a way that at least one of the adsorbers (10, 11, 12, 13) is always working in the charging mode, thereby to achieve a continuous adsorption procedure, characterized in that each regeneration period includes a concluding drying phase in which, instead of water vapor, exhaust air from the working space (2) flows through the adsorber (10, 11, 12, 13) in question, the exhaust air after leaving said adsorber (10, 11, 12, 13) being fed to the at least one adsorber (10, 11, 12, 13) which in that period is working in the charging mode, and in that each charging period includes an initial phase and a subsequent main phase, which are determined by virtue of the fact that the hot and humid air flow issuing from an adsorber (10, 11, 12, 13) which is in the initial phase of a charging period is fed to a separate treatment while the air flow issuing from an adsorber (10, 11, 12, 13) which is in the main phase of a charging period is returned directly into the working space (2).

2. A method as set forth in claim 1, characterized in that the length of the initial phase of the charging period is set by means of a time control.

3. A method as set forth in claim 1, characterized in that the temperature of the air flow issuing from an adsorber (10, 11, 12, 13) which is operating in the charging mode is measured and in that the initial phase of the charging period is terminated when said temperature falls below a predeterminable limit value.

4. A method as set forth in any of claims 1 to 3, characterized in that the separate treatment provides that at least a part of the air flow which issues from an adsorber (10, 11, 12, 13) in the initial phase of the charging period and which is kept separte is cooled and thereafter returned into the working space (2).

5. A method as set forth in any of claims 1 to 4, characterized in that the separate treatment provides that at least a part of the air flow which issues from an adsorber (10, 11, 12, 13) in the initial phase of the charging period and which is kept separate is expelled into the surrounding atmosphere.

6. A method as set forth in claim 5, characterized in that the air expelled into the surrounding atmosphere firstly passes through a heat exchanger (37) to recover a part of the heat contained in the air.

7. A method as set forth in any of claims 1 to 6, characterized in that an amount of fresh air which approximately corresponds to the amount of air expelled into the surrounding atmosphere is sucked in out of the surrounding atmosphere, is conditioned and fed to the working space (2).

8. A method as set forth in claims 6 and 7, characterized in that heat which is taken from the air expelled into the surrounding atmosphere is used to heat the fresh air which is sucked in from the surrounding atmosphere.

9. A method as set forth in claim 7 or 8, characterized in that the conditioned fresh air which is sucked in out of the surrounding atmosphere is directly fed to the working space (2).

10. A method as set forth in claim 7 or 8, characterized in that the fresh air which is sucked in out of the surrounding atmosphere is at least partially mixed with the air which is returned from the adsorbers (10, 11, 12, 13) and in that said air mixture is fed to the working space (2).

11. A method as set forth in any of claims 7 to 10, characterized in that the air which is returned from the adsorbers is fed to a region of the working space that is different from the region to which conditioned fresh air is fed which is sucked in from the surrounding atmosphere.

12. An installation for removing solvent vapor from exhaust air according to the method set forth in any preceding claim, comprising:
- blower means (5) for sucking the exhaust air out of a working space (2),
- at least two activated carbon adsorbers (10, 11, 12, 13) arranged in mutually parallel relationship,
- a flap valve arrangement which is controllable by a control means and which, for each of the at least two adsorbers (10, 11, 12, 13) includes an inlet valve means (18) which, in the opened condition, communicates the adsorber with the associated blower means (5), and an outlet valve means (24) which, in the opened condition, passes air issuing from the adsorber (10, 11, 12, 13) into a main flow path (26), the arrangement being such that each of the adsorbers (10, 11, 12, 13) is switchable to and fro between a charging mode in which exhaust air to be cleaned flows through the adsorber and the adsorber adsorbs solvent contained in the exhaust air, and a regeneration mode in which the adsorber is separated from the flow of exhaust air and water vapor can flow through the adsorber for desorbing and flushing out the adsorbed solvent, the switching action between the charging and the regeneration modes occurring alternately in such a way that at least one of the adsorbers (10, 11, 12, 13) is always operating in the charging mode, and
- a discharge means (32, 45) by means of which air which has flowed through one of the adsorbers (10, 11, 12, 13) can be expelled into the surrounding atmosphere,
characterized in that the controllable flap valve arrangement further includes the following, for each adsorber (10, 11, 12, 13):
- a second outlet valve means (25) which in its open condition communicates the adsorber (10, 11, 12, 13) with a conduit (19) by way of which air issuing from the adsorber (10, 11, 12, 13) can be returned to the flow path leading from the working space (2) to the adsorbers (10, 11, 12, 13) so that air from the working space (2) which flows through an adsorber (10, 11, 12, 13) in a drying phase which concludes the adsorber regeneration period when the inlet valve means (18) is open and the first outlet valve means (24) is closed can be fed by way of the opened second outlet valve means (25) to the at least one adsorber (10, 11, 12, 13) which is operating in the charging mode, and
- an auxiliary outlet valve means (27) which, in its open condition, communicates the adsorber (10, 11, 12, 13) with an auxiliary flow path (27) so that air from the working space (2) which flows through the adsorber (10, 11, 12, 13) in an initial phase of its charging period when the inlet valve means (18) is open and the first and second outlet valve means (24, 25) are closed can be fed by way of said auxiliary flow path (28) to a separate treatment,
and in that the main flow path (26) is communicated with the working space (2) so that air from the working space (2) which flows through the adsorber (10, 11, 12, 13) in a main phase following the initial phase of its charging period can be returned into the working space (2) after cleaning of said air.

13. An installation as set forth in claim 12, characterized in that the control means includes a time control operable to predetermine the length of the initial phase.

14. An installation as set forth in claim 12, characterized in that for each adsorber (10, 11, 12, 13) the control means includes a temperature measuring device (20) for measuring the temperature of cleaned air issuing therefrom, said device terminating the initial phase when the temperature of the issuing air falls below a predeterminable limit value.

15. An installation as set forth in any of claims 12 to 14, characterized in that the auxiliary flow path (28) comprises a cooling means (38) and leads to a change-over switching device (42, 43) by means of which air flowing through it can be at least partially fed after suitable cooling into the main flow path (26) and at least partially passed to a discharge chimney (45).

16. An installation as set forth in any of claims 12 to 15, characterized in that the auxiliary flow path (28) comprises a second cooling means (37).

17. An installation as set forth in any preceding claim, characterized in that a suction and conditioning means (48, 50, 55, 56) is provided for sucking fresh air from the surrounding atmosphere, said suction and conditioning means being adapted to feed the working space (2) with an amount of fresh air which corresponds to the amount of air which is discharged.

18. An installation as set forth in claim 17, characterized in that the suction and conditioning means (48, 50, 55, 56) includes a heat exchanger (56) for heating the sucked-in fresh air and/or a heat exchanger (55) for cooling the sucked-in fresh air.

19. An installation as set forth in claim 18, characterized in that the heat exchanger (56) for heating the sucked-in fresh air is communicated with one of the cooling means (37, 38) of the auxiliary flow path (28) by means of a common heat exchange medium circuit.

20. An installation as set forth in claim 18 or 19, characterized in that a mixing means (33, 52, 53) is provided for mixing at least a part of the fresh air sucked in from the surrounding atmosphere with air which is returned from the adsorbers (10, 11, 12, 13).

## Revendications

1. Procédé pour enlever des vapeurs de solvants de l'air d'échappement qui est aspiré hors d'un espace de travail (2) qui est purifié à l'aide d'au moins deux adsorbants au charbon actif (10, 11, 12, 13) disposés parallèlement l'un à l'autre, chaque adsorbant traversant des cycles opératoires qui comprennent respectivement une période de chargement pendant lequel l'adsorbant (10, 11, 12, 13) est traversé par l'air d'échappement et adsorbe les vapeurs de solvants qu'il contient et une période de régénération, dans laquelle l'adsorbant (10, 11, 12, 13) est séparé du flux d'air d'échappement et traversé par de la vapeur d'eau, qui désorbe et évacue le solvant auparavant adsorbé, les cycles opératoires desdits au moins deux adsorbants (10, 11, 12, 13) étant décalés dans le temps pour obtenir une opération d'adsorption continue, de sorte que toujours au moins un des adsorbants (10, 11, 12, 13) est en opération de chargement,
caractérisé en ce que chaque période de régénération comporte une phase de séchage finale, dans laquelle l'adsorbant considéré (10, 11, 12, 13) est traversé par l'air d'échappement issu de l'espace de travail (2) à la place de la vapeur d'eau, ledit air d'échappement après avoir quitté ledit adsorbant (10, 11, 12, 13) est conduit audit au moins un adsorbant qui est en opération de chargement dans cette période,
en ce que chaque période de chargement comprend une phase de début et une phase principale suivante, qui sont déterminées en ce que le flux d'air chaud et humide qui sort d'un adsorbant (10, 11, 12, 13) se trouvant dans la phase de début d'une période de chargement est amené vers un traitement séparé, pendant que le flux d'air qui sort d'un adsorbant (10, 11, 12, 13) se trouvant dans la phase principale d'une période de chargement est directement renvoyé dans l'espace de travail (2).

2. Procédé selon la revendication 1, caractérisé en ce que la longueur de la phase de début de la période de chargement est déterminée à l'aide d'une minuterie.

3. Procédé selon la revendication 1, caractérisé en ce que la température du flux d'air sortant d'un adsorbant (10, 11, 12, 13) qui est en opération de chargement est mesurée et la phase de début de la période de chargement se termine lorsque cette température descend en-dessous d'une valeur limite prédéterminable.

4. Procédé selon l'une des revendications 1 à 3, caractérisé en ce que le traitement séparé consiste à refroidir au moins une partie du flux d'air maintenu séparé et sortant d'un adsorbant (10, 11, 12, 13) dans la phase de début de la période de chargement et à la renvoyer ensuite dans l'espace de travail (2).

5. Procédé selon l'une des revendications 1 à 4, caractérisé en ce que le traitement séparé consiste à évacuer dans l'environnement au moins une partie du flux d'air maintenu séparé et sortant d'un adsorbant (10, 11, 12, 13) dans la phase de début de la période de chargement.

6. Procédé selon la revendication 5, caractérisé en ce que l'air évacué dans l'environnement traverse d'abord un échangeur de chaleur (37) afin de récupérer une partie de la chaleur qu'il contient.

7. Procédé selon l'une des revendications 1 à 6, caractérisé en ce qu'une quantité d'air frais, qui correspond environ à la quantité d'air évacué dans l'environnement, est aspiré de l'environnement, conditionné et conduit à l'espace de travail (2).

8. Procédé selon les revendications 6 et 7, caractérisé en ce que la chaleur qui est extraite de l'air évacué dans l'environnement est utilisé pour réchauffer l'air frais aspiré de l'environnement.

9. Procédé selon l'une des revendications 7 ou 8, caractérisé en ce que l'air frais conditionné et aspiré évacué de l'environnement est directement conduit à l'espace de travail (2).

10. Procédé selon l'une des revendications 7 ou 8, caractérisé en ce que l'air frais aspiré de l'environnement est au moins partiellement mélangé avec l'air renvoyé par les adsorbants (10, 11, 12, 13) et ce mélange d'air est conduit à l'espace de travail (2).

11. Procédé selon l'une des revendications 7 à 10, caractérisé en ce que l'air renvoyé par les adsorbants est conduit à une autre zone de l'espace de travail, que l'air frais conditionné et aspiré de l'environnement.

12. Dispositif pour enlever des vapeurs de solvants de l'air d'échappement selon le procédé défini dans l'une des revendications précédentes,comprenant :
des ventilateurs (5) pour extraire l'air d'échappement hors d'un espace de travail (2),
au moins deux adsorbants de charbon actif (10, 11, 12, 13) disposés parallèlement l'un à l'autre,
un arrangement de volets actionnables à l'aide d'un dispositif de commande, qui pour chacun au moins des deux adsorbants (10, 11, 12, 13) comporte un volet d'admission (18) qui le relie à l'état ouvert avec le ventilateur correspondant (5), et un volet de sortie (24) qui à l'état ouvert conduit l'air sortant de l'adsorbant (10, 11, 12, 13) dans un chemin d'écoulement principal (26) de telle sorte que chacun des adsorbants (10, 11, 12, 13) est commutable entre une opération de chargement, dans laquelle il est traversé par l'air d'échappement à purifier et adsorbe le solvant qu'il contient, et une opération de régénération, dans laquelle il est séparé du flux d'air d'échappement et peut être traversé par de la vapeur d'eau, qui désorbe et évacue le solvant adsorbé, la commutation se produisant de manière alternée de telle manière que toujours au moins un des adsorbants (10, 11, 12, 13) est en opération de chargement, et
un dispositif d'évacuation (32, 45) à l'aide duquel de l'air qui est passé à travers un des adsorbants (10, 11, 12, 13), peut être délivré dans l'environnement,
caractérisé en ce que l'arrangement de volets commandables comprend en outre pour chaque adsorbant (10, 11, 12, 13) :
un deuxième volet de sortie (25), qui relie à l'état ouvert l'adsorbant (10, 11, 12, 13) avec une conduite (19), par laquelle l'air sortant de l'adsorbant (10, 11, 12, 13) peut être renvoyé vers le chemin d'écoulement menant de l'espace de travail (2) aux adsorbants (10, 11, 12, 13) de telle sorte que l'air issu de l'espace de travail (2) qui s'écoule à travers un adsorbant (10, 11, 12, 13) dans une phase de séchage terminant sa période de régénération lorsque le volet d'admission (18) est ouvert et que le premier volet de sortie (24) est fermé, peut être conduit audit au moins un adsorbant (10, 11, 12, 13) qui est en opération de chargement par l'intermédiaire du deuxième volet de sortie ouvert (25),
un volet de sortie auxiliaire (27), qui relie à l'état ouvert l'adsorbant (10, 11, 12, 13) à un chemin d'écoulement auxiliaire (28) de telle sorte que l'air issu de l'espace de travail (2), qui s'écoule à travers l'adsorbant (10, 11, 12, 13) dans une phase de début de sa période de chargement lorsque le volet d'admission est ouvert et les premier et deuxième volets de sortie (24 et 25) sont fermés, peut être conduit à un traitement séparé par l'intermédiaire de ce chemin d'écoulement auxiliaire (28),
et en ce que le chemin d'écoulement principal (26) est relié à l'espace de travail (2) de telle sorte que l'air issu de l'espace de travail (2), qui s'écoule à travers l'adsorbant (10, 11, 12, 13) dans une phase principale de sa période de chargement qui suit la phase de début peut être renvoyé après sa régénération dans l'espace de travail (2).

13. Dispositif selon la revendication 12, caractérisé en ce que le dispositif de commande comprend une minuterie, qui détermine la longueur de la phase de début.

14. Dispositif selon la revendication 12, caractérisé en ce que le dispositif de commande pour chaque adsorbant (10, 11, 12, 13) comprend un dispositif de mesure de température (20) pour mesurer la température de l'air purifié sortant de lui, qui termine la phase de début lorsque la température de l'air sortant descend en-dessous d'une valeur limite prédéterminable.

15. Dispositif selon l'une des revendications 12 à 14, caractérisé en ce que le chemin d'écoulement auxiliaire (28) comprend un dispositif de refroidissement (38) et conduit à un dispositif de commutation (42, 43), à l'aide duquel l'air qui le traverse peut être au moins partiellement alimenté après refroidissement correspondant dans le chemin d'écoulement principal (26) et peut être conduit au moins partiellement vers une cheminée d'évacuation (45).

16. Dispositif selon l'une des revendications 12 à 15, caractérisé en ce que le chemin d'écoulement auxiliaire (28) comprend un deuxième dispositif de refroidissement (37).

17. Dispositif selon l'une des revendications précédentes, caractérisé en ce qu'un dispositif d'aspiration et de conditionnement (48, 50, 55, 56) est prévu pour l'air frais provenant de l'environnement, qui conduit une quantité d'air frais correspondant à la quantité d'air évacué vers l'espace de travail.

18. Dispositif selon la revendication 17, caractérisé en ce que le dispositif d'aspiration et de conditionnement (48, 50, 55, 56) comprend un échangeur de chaleur (56) pour chauffer et/ou un échangeur de chaleur (55) pour refroidir l'air frais aspirer.

19. Dispositif selon la revendication 18, caractérisé en ce que l'échangeur de chaleur (56) pour chauffer l'air frais aspiré est relié à un dispositif de refroidissement (37, 38) du chemin d'écoulement auxiliaire (28) par un circuit d'agents caloporteurs commun.

20. Dispositif selon l'une des revendications 18 ou 19, caractérisé en ce qu'il est prévu un dispositif de mélangeage (33, 52, 53) à travers lequel au moins une partie de l'air frais aspiré de l'environnement peut être mélangé avec l'air renvoyé par les adsorbants (10, 11, 12, 13)
